# EUROPEAN PATENT APPLICATION

(11) **EP 4 295 958 A1**
(43) Date of publication of application: **27.12.2023**
(21) Application number: 22755620.6
(22) Date of filing: 10.02.2022
(51) Int. Cl.: B05B 7/32, B05B 7/04, B05B 15/40

(54) **DEVICE FOR PURIFYING AN AIR-WATER CURRENT**

(30) Priority: 19.02.2021 ES 202130343 U
(71) Applicant: WINGSCOMPANY, S.L., 29006 Málaga (ES)
(72) Inventor: MARIN GARCIA, Francisco Javier, 03690 San Vicente del Raspeig (Alicante) (ES)
(74) Representative: Sahuquillo Huerta, Jesús
(86) International application number: PCT/ES2022/070066
(87) International publication number: WO 2022/175574

(57) **Abstract**

Disclosed is a device designed for purifying an air-water current, which allows the size of the bubbles from the mixture to be reduced and which comprises: an inlet for the air-water mixture; a first filter occupying the cross-section of the device, with a plurality of holes; a first expansion chamber after the first filter; a second filter with the same characteristics and arrangement as the first filter and located after the first expansion chamber; a second expansion chamber after the second filter; a third filter after the second expansion chamber, with the same features and arrangement as the first and second filters; a third expansion chamber after the third filter; a pressure-regulating valve arranged at the outlet of the device; and a regulating flywheel that allows the valve to be closed and opened.

## Description

### OBJECT OF THE INVENTION

The present invention consists of a device for the purification of water, by means of the action of passing a stream of water coming from a pump to which air has been injected, through the various cavities of said device, which allows it to be installed on a small scale or for a large water treatment installation.

### BACKGROUND OF THE INVENTION

In a large number of chemical or physical processes, particularly in drying and combustion processes, it is of great importance to obtain reactive microdroplets of fluid. Usually, a fluid is pressed for this purpose through a specially designed atomizing nozzle, which performs a spraying or atomization of the fluid. Atomization can also be performed with the aid of steam or compressed air, whereas these methods are not used with small amounts of fluid.

It is also generally known how to enhance or accelerate the exit of a fluid jet from a nozzle through a gas flow that surrounds the emerging jet concentrically. However, the gas flow is not intended to effect an atomization of the fluid exiting the nozzle but, on the contrary, to hold the fluid jet together. Finally, it is also known how to transfer a rotary motion to the thin gas mantle that holds together the fluid jet or also a droplet sponge, so as to obtain a rotation of the fluid jet itself. However, also with this known solution the intention is to avoid an atomization of the fluid or an additional fine atomization.

International patent application WO/1997/002096 discloses a lubricant misting nozzle designed to provide an output in the form of discrete liquid droplets. The nozzle has a particular application in conjunction with spray lubrication systems where it is desired to direct a focused stream of lubricant toward a device to be lubricated. The nozzle is particularly adapted for use in connection with oil mist lubrication units removes oil mist from the carrier gas, collects the extracted oil and or reintroduces it into the carrier gas stream so that it can be sprayed as a series of uniformly sized droplets to a target to be lubricated. The nozzle may include a helical flow path for the mist, during the course of which oil is drawn from the unit's mist, and a needle-like assembly that collects the extracted oil and channels it into the gas flow nozzle as it exits the nozzle.

Conventional systems for purifying water in water reservoirs such as water tanks, swimming pools and the like include a filtration apparatus to remove dust and the like in the water.

The filter is problematic in maintenance as it frequently becomes clogged. The cyclone is more satisfactory in the degree of air purification and cannot be applied to indoor sports institutions, let alone indoor swimming pools that must undergo air purification containing chlorine gas. Water filtration systems cannot be used to eliminate bad odors.

In the field of devices designed to counteract pollution in large bodies of water contained in natural pools, devices known as oxygenators are currently used which, by means of pumping, cause the mixing of water with air. These devices may consist of floating turbine pumps that suck in water and expel it back into the pool, thus facilitating the reestablishment of equilibrium conditions between atmospheric oxygen and dissolved oxygen in the water. However, these devices have proven to be of limited usefulness in that they facilitate oxygen diffusion in surface water layers only, whereas this diffusion process is not suitable for involving deeper water layers. Other devices are known to act in deep water layers (e.g. bubble guns, Limo oxygenators and the like), however, their action is limited to limited pool areas; moreover, they do not provide for the use of oxygen or do not provide for the recovery of undissolved oxygen when this gas is used.

It is common to use a blower or pump to generate air pressure that is channeled to a chamber below the pipe and thence to the pipe through a plurality of holes in the bottom of the pipe. Since the water will flow back through the air supply pipe when the blower is not operating, the blower is normally placed above the
water line to prevent damage from water backflow from the pipe. However, for aesthetic reasons, it is desirable to locate the blower below the water level, but to do so, some means must be used to prevent water from backing up into the blower when the blower is off.

Spanish utility model ES0281762 discloses an injector nozzle for producing turbulence in bathtubs, swimming pools and the like, characterized essentially by being constituted by a one-piece body determined by two parallel bushings joined by a common wall in which appears a truncated cone-shaped orifice in the manner of a Venturi device, one of whose bushings is normally smaller in diameter than the adjacent one and from which a perpendicular tubular part with an external thread and a stop flange is derived, while the other bushing has a hole opposite to that threaded part and intended to allow the central truncated cone-shaped hole to be machined, this nozzle being completed by two additional plugs, with gaskets, a washer, a tightening nut, a cover cap and an extreme tubular nut intended for.

The present invention solves the problems presented in the art, since it proposes a device capable of causing a water-air mixture to produce micro and nano bubbles, such that these micro or nano bubbles move randomly through the water and remain suspended in the water for long periods of time, acting as a generator that delivers oxygen and/or ozone continuously to all the water. Due to the long residence time of the micro and nano bubbles and the huge contact surface between the gas bubble and the water, the oxygen is dissolved very efficiently. The device can be applied in various activities, this technology is able to reduce harmful algae in the water during summer and improve the overall water quality by two actions, firstly by distributing oxygen and/or ozone from the surface to the ground and through oxidation. Increasing the growth of your agricultural crops, improving their quality, saving on costs, and contributing to cleaner production are some of the benefits provided by the device of the invention.

### DESCRIPTION OF THE DRAWINGS

In order to complement the description being made and with the object of aiding a better understanding of the characteristics of the invention, in accordance with a preferred example of the practical realization thereof, there is attached as an integral part of said description, a set of drawings wherein, with illustrative and non-limiting character, the following has been represented:

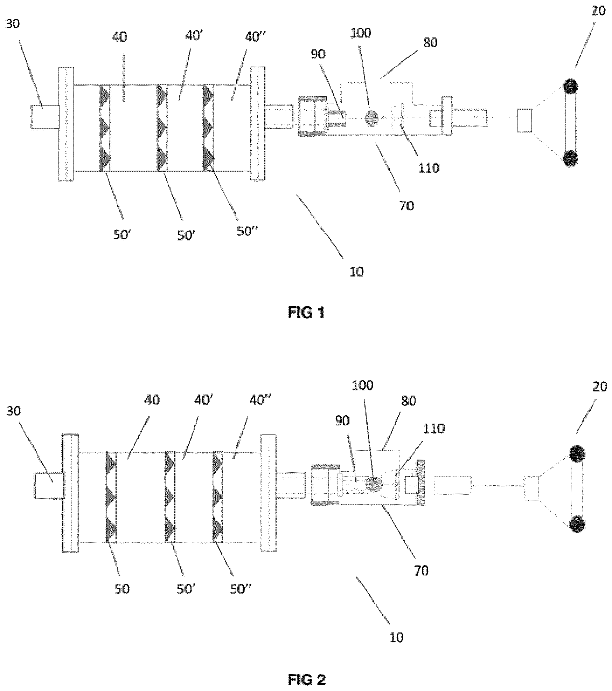

Figure 1 shows an internal view of the arrangement of the elements inside the device (10) with the valve open, where the alternation of the cavities (40), (40') and (40") and the filters (50), (50') and (50") can be seen.
Figure 2.- shows an internal view of the arrangement of the elements inside the device (10) with the valve closed, where the alternation of the cavities (40), (40') and (40") and the filters (50), (50') and (50") can be seen.

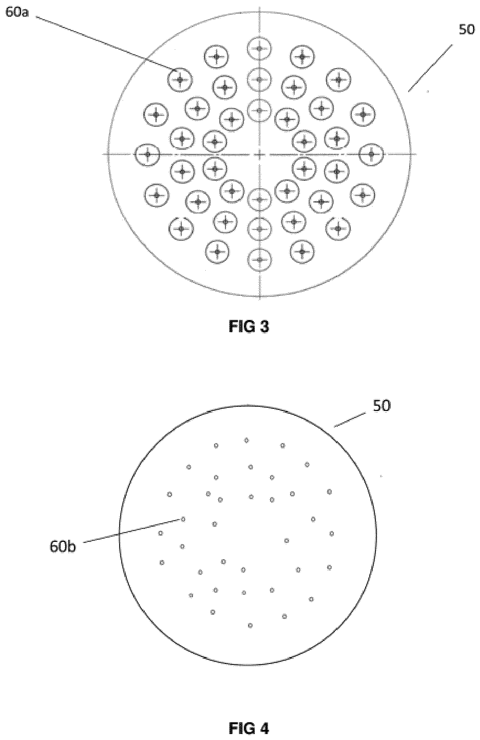

Figure 3.- shows a view of the inlet surface of the filter (50), where the inlet holes (60a) can be seen.
Figure 4.- shows a view of the surface of the filter (50), where the outlet holes (60b) can be seen.

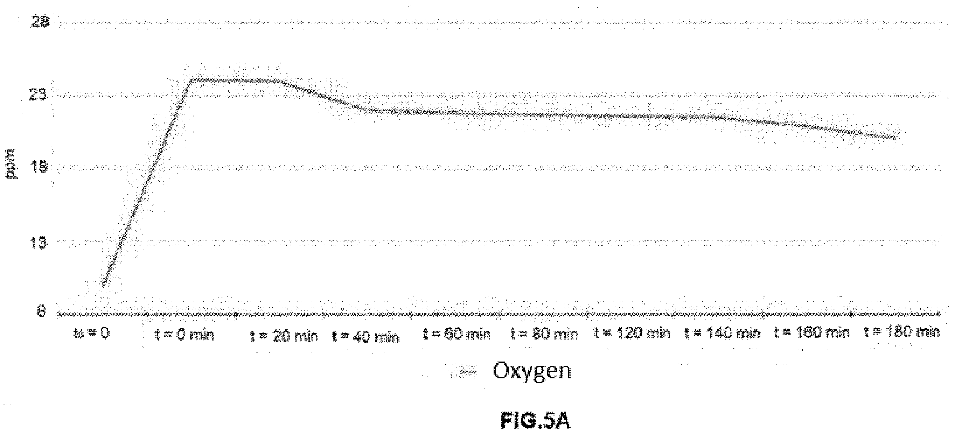

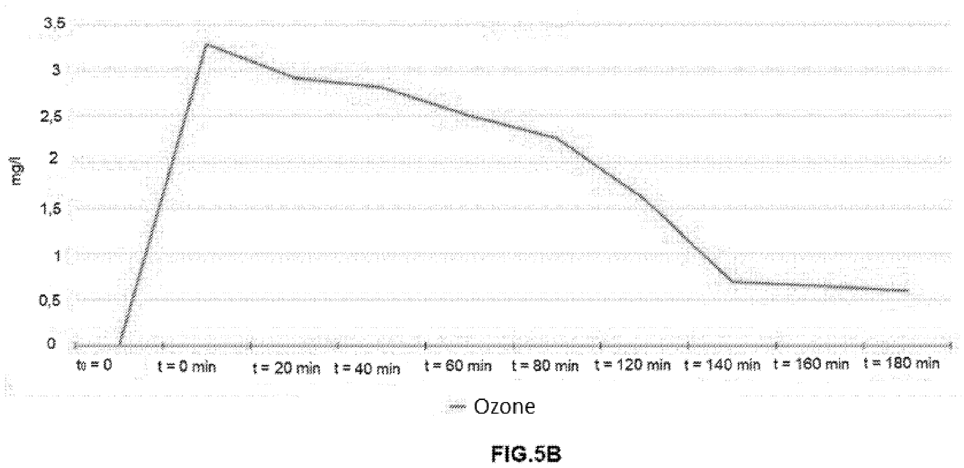

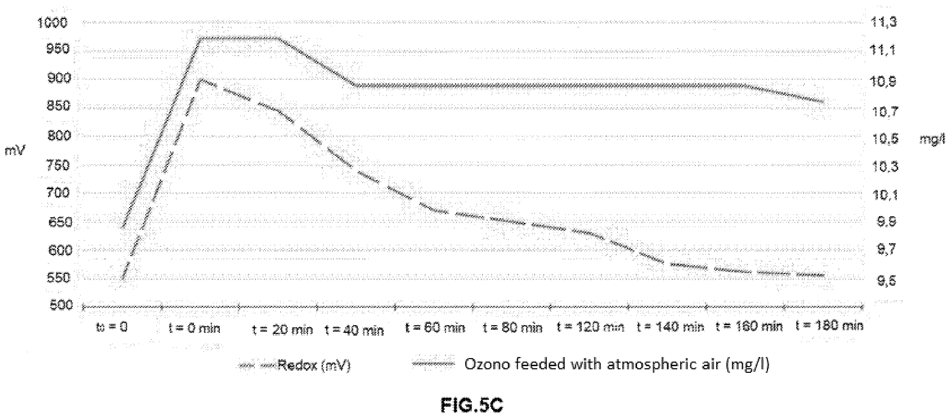

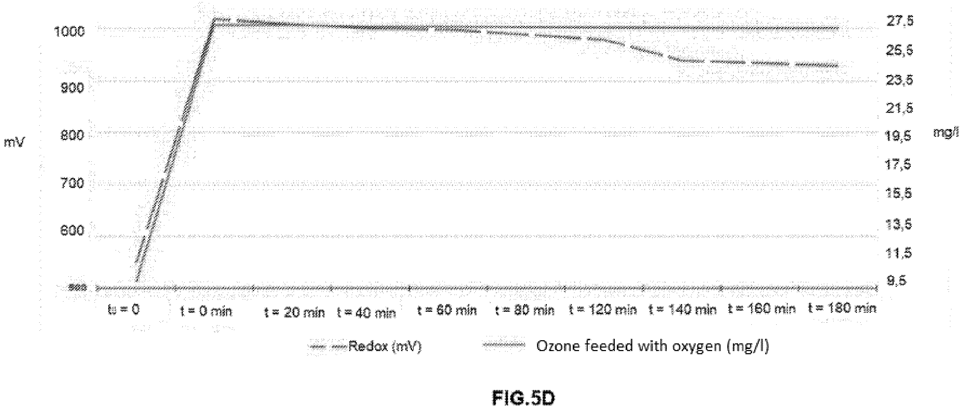

Figures 5A to 5D.- show some graphs where the results obtained in tests carried out with the device object of the present invention are represented, where Fig.5A shows the results of generation of nanobubbles when fed with oxygen; Fig. 5B shows the results of generation of nanobubbles when fed with ozone; Fig.5C shows the results of generation of nanobubbles when fed with ozone; Fig.5C shows the results of generation of nanobubbles when fed with atmospheric air and the oxidizing potential (Redox) is shown; and Fig. 5D shows the results of generation of nanobubbles when fed with atmospheric air.C shows the results of nanobubble generation, when it is ozone generated with atmospheric air feed and the oxidizing potential (Redox) is shown; and Fig. 5D shows the results of nanobubble generation when it is ozone generated with oxygen feed and the oxidizing potential (Redox) is shown. In these plots, unsaturated tap water is referred to as t0 = 0, while t = 0 min and the remaining values of t refer to saturated water.

### PREFERRED EMBODIMENT OF THE INVENTION

The present invention discloses a device which permits the purification of water by means of the action of passing a water-air stream through it, this action of passing the mixture produces a decrease of bubbles to levels of micro or nano bubbles, which remain suspended in the water for long periods of time, acting as a generator which delivers a gas, such as oxygen and/or ozone continuously to all the water. At this point it is noted that the term air is not intended to be limiting but refers to a substance in a gaseous state or gas, which can be injected into the device. In some preferred embodiments of the invention the gas injected into the air-water mixture is selected from oxygen, ozone, atmospheric air or a mixture of at least two of them, although other compounds such as nitrogen, which is the main component of atmospheric air, could also be used.

The water purification device (10) incorporates a plurality of filters (50), (50') and (50") with perforations (60a) and (60b), all with the same dimensions and characteristics, which are arranged one after the other leaving an expansion chamber between consecutive filters, that is between the filters (50) and (50') there is a first expansion chamber (40), between the filter (50') and (50") a second expansion chamber (40') and at the outlet of the third filter (50") a third expansion chamber (40").

The perforations (60a) and (60b) in the filters (50), (50') and (50") are arranged on the surface of the filters (50), (50') and (50") forming a circular region and each of the perforations (60a) and (60b) are made in such a way that the surface of the perforation in the inlet section (60a) is larger than the surface of the perforation (60b) in the outlet section, i.e., between the perforations (60a) and (60b) a conical cavity of the Venturi type is created.

The device (10) for purifying an air-water mixture of the invention allows forming part of a system comprising a pump connected to a water intake and to a capillary allowing gas injection into said pump and wherein the device (10) receives a stream of water and air coming from the pump, wherein the injected gas is oxygen, ozone, atmospheric air and/or a mixture of at least two of them, and comprising: an inlet (30) for the water-air mixture; a first filter (50) occupying the cross section of the device (10) with a plurality of perforations (60), wherein the inlet perforations (60a) have greater surface area than the outlet perforations (60b) and wherein the inlet of the water-air mixture to the filter (50) is through the perforation (60a) with greater surface area and the outlet of the mixture is through the perforation with lesser surface area (60b); a first expansion chamber (40) downstream of said first filter (50); a second filter (50') with the same characteristics and arrangement as the first filter (50) occupying the cross section of the device (10) and downstream of the first expansion chamber (40); a second expansion chamber (40') downstream of said second filter (50'); a third filter (50") downstream of the second expansion chamber (40') with the same characteristics and arrangement as the first (50) and second (50') filter; a third expansion chamber (40") downstream of said second filter (50'); a pressure regulating valve (70) arranged at the outlet (80) of the device (10), consisting of a conical end bushing (90); a stainless steel ball (100) which seals the conical end bushing by contact with a rubber plug (110) (SilentBlock^{®} rubber) to dampen the pressure; and a regulating handwheel (20) for closing and opening the valve (70).

The device can have a greater number of combinations of filters (50), (50') and (50") according to the dimensions of the device (10), but always maintaining the described sequence.

The usual form and characteristic of this type of perforations (60a), (60b) in the filters (50), (50') and (50"), to originate small cone-shaped cavities, arranging in first place the entrance of the perforation of greater surface (60a) towards an exit with the perforation of smaller surface (60b) this causes to diminish the air bubble in such a way that when originating a rotary allows to break the bubbles turning them into others of smaller size.

The number of filters (50), (50'), (50") and perforations (60), their arrangement, dimensions and location may vary depending on the internal assembly of the device (10) and variables such as water flow rate and pressure.

The device (10) allows the water stream to reach the device from a pump, in which air is injected through a capillary. This mixture comes out of the pump into the device (10). It enters the device (10) through the inlet (30) and first passes through the filters (50) which causes the size of the bubbles generated to decrease, then the flow passes through the first expansion chamber (40) where the diminished bubbles pass through a second filter (50') with the same characteristics as the filter (50) and in the same arrangement which causes a further decrease of the bubbles and at the outlet it passes through a second expansion chamber (40') where the diminished bubbles pass through a third filter (50") with the same characteristics as the filters (50) and (50') and in the same arrangement, this combination allows that at the exit of said third filter (50") the bubbles have been reduced as much as at the micro or nano bubble level. When the water-air mixture has left the device (10) the regulating valve (70) allows to control the exit of the mixture and to maintain the size of the bubbles, the closing and opening of the valve (70) is carried out by means of a regulating handwheel (20) that by turning to the right or to the left closes or opens said regulating valve (70) maintaining the control of the device (10). It is important to note that the ball (100) produces movements due to the pressure that agitates the water enhancing the result.

Micro or nano bubbles are extremely small bubbles, a million times smaller than small visible bubbles. They have the ability to change the normal characteristics of water, as there is essentially no loss of oxygen or other gas escaping into the atmosphere.

As can be seen in the graphs of Fig5A-5D, by means of the generation of nanobubbles with the tests carried out in the device object of the present invention with pure atmospheric air, oxygen and ozone and based on measurements on the resulting nanobubble with specific laboratory equipment for this purpose, very high levels of oxygen, ozone and oxidizing potential (Redox) concentration have been observed in the resulting waters.

For that reason, the use of the device object of the present invention is directed to agriculture, and for example as treatment for irrigation with dammed water, specifically to the generation of nanobubbles with high soluble oxygen content for irrigation in agriculture; for the generation of nanobubbles with high soluble ozone content for use as pesticide or oxidizing biocide in the agricultural sector; and/or for the generation of nanobubbles with high ozone and soluble oxygen content for use as odor treatment and decomposition of irrigation ponds.

In this sense, the use of oxygen gas for the generation of nanobubbles with high soluble oxygen content for irrigation of all types of plants (greenhouses, olive groves, fruit trees, etc.) and any type of crop to which oxygen can be supplied via nanobubble, is based on the advantage that oxygen gas does not escape to the atmosphere following a physical liquid/gas law beyond the maximum solubility of oxygen in water at a given pressure and temperature. The oxygen content remains in the water for long periods of time at a high concentration until it is absorbed by the plant and the nanometer size facilitates absorption by the plant. The use of ozone gas for the generation of nanobubbles with high soluble ozone content for use as a pesticide or oxidizing biocide of high lethality in all types of plants (greenhouses, olive groves, fruit trees, etc.) and any type of crop that requires pesticide application processes. Application for sterilization of agricultural soils and tree tops and leaves, where the advantage is that ozone gas does not escape to the atmosphere following a physical law liquid/gas beyond the maximum solubility of ozone in water at a given pressure and temperature and the ozone content remains in the water for long periods of time at high concentration while in gas form lasts a few seconds and being in nanometer size facilitates absorption by the plant. In this case, it should be noted that ozone is lethal for more than 90% of pathogens at concentrations above 1.5 ppm and that above a redox of 650 - 700 mV life is practically impossible (for example, the bacterium Escherichia Coli does not survive a redox of 650 mV and is eliminated immediately). The graphs in Fig.5C-5D show the usefulness of the present invention. On the other hand, the use of ozone gas for the generation of nanobubbles with high ozone and soluble oxygen content for use as odor treatment and decomposition of irrigation ponds thanks to the oxidizing biocide action of ozone and the generation of aerobic conditions of oxidizing redox by the high concentration of oxygen that prevent fermentation and putrefaction processes of stagnant water, where the ozone content remains in the water for a longer time allowing a greater disinfectant action and, at the same time, avoiding oxygen consumption that impoverishes the water leading to decomposition.

In this line, it is important to point out that the operation of the device of the invention can ensure that the water quality improves structurally and not temporarily as with aeration or traditional chemicals, this allows enriching the water with oxygen and/or ozone in different irrigation locations, avoiding the application of chemicals to improve water quality.

## Claims

1. Device for the purification of an air-water stream decreasing the size of bubbles coming from said mixture, **characterized in that** it comprises an inlet (30) for the water-air mixture; a first filter (50) occupying the cross section of the device (10) with a plurality of perforations (60a) and (60b), wherein the inlet perforations (60a) have greater surface area than the outlet perforations (60b) and wherein the inlet of the water-air mixture to the filter (50) is through the perforation (60a) with greater surface area and the outlet of the mixture is through the perforation with smaller surface area (60b); a first expansion chamber (40) downstream of said first filter (50); a second filter (50') with the same characteristics and arrangement as the first filter (50) occupying the cross section of the device (10) and downstream of the first expansion chamber (40); a second expansion chamber (40') downstream of said second filter (50'); a third filter (50") downstream of the second expansion chamber (40') with the same characteristics and arrangement as the first (50) and second (50') filters; a third expansion chamber (40") downstream of said second filter (50'); a pressure regulating valve (70) arranged at the outlet (80) of the device (10), consisting of a conical end bushing (90); a stainless steel ball (100) which seals said conical end bushing by means of contact with a rubber block (110) (rubber silentblock) to cushion the pressure; and a regulating handwheel (20) which allows to close and open said valve (70).

2. Device for the purification of an air-water stream according to claim 1 **characterized in that** the perforations (60a) and (60b) are made in such a way that the surface of the perforation in the inlet section (60a) is larger than the surface of the perforation (60b) in the outlet section, i.e. between the perforations (60a) and (60b) a conical cavity of the Venturi type is created.

3. Device for the purification of an air-water stream according to claim 1 **characterized in that** the filters (50), (50') and (50") have the same dimensions and characteristics.

4. Device for the purification of an air-water stream according to claim 1 **characterized in that** the number of filters (50), (50'), (50"), their arrangement, measurements and location are a function of variables such as water flow rate and pressure.

5. Device for purifying an air-water stream according to claim 1 **characterized in that** the number of perforations (60a) and (60b), their arrangement, measurements and location are a function of variables such as water flow rate and pressure.

6. Device for purifying an air-water stream according to claim 1 **characterized in that** the gas injected into the air-water mixture is selected from oxygen, ozone, atmospheric air or a mixture of at least two of them.

7. Use of the device defined in any of the preceding claims for agriculture.

8. Use of the device according to claim 7 for the treatment of irrigation dammed water.
